(19) Europäisches Patentamt

European Patent Office

Office européen des brevets

(11) EP 0 570 093 B1

(12) **EUROPEAN PATENT SPECIFICATION**

(45) Date of publication and mention
of the grant of the patent:
**02.06.1999 Bulletin 1999/22**

(51) Int Cl.⁶: **C08F 220/18**, C10M 145/14
// C10N30:02, C10N30:04,
C10N40:00

(21) Application number: **93301700.6**

(22) Date of filing: **05.03.1993**

(54) **Ashless dispersant poly(meth)acrylate polymers**

Aschefreie Dispersante Poly(Meth)Acrylat-Polymere

Poly(meth)acrylate polymères dispersant sans cendres

(84) Designated Contracting States:
**AT BE CH DE DK ES FR GB GR IE IT LI LU MC NL
PT SE**

(30) Priority: **20.03.1992 US 855177
07.07.1992 US 909839
10.02.1993 US 9001**

(43) Date of publication of application:
**18.11.1993 Bulletin 1993/46**

(73) Proprietor: **Röhm RohMax Holding GmbH
64293 Darmstadt (DE)**

(72) Inventors:
 • **Lai, Chung Yin
 Plymouth Meeting, Pennsylvania 19462 (US)**
 • **Naples, John Otto
 Buckner, Missouri 64016 (US)**

(56) References cited:
EP-A- 0 418 610          EP-A- 0 439 254
EP-A- 0 542 111          GB-A- 1 189 281
GB-A- 1 333 733          US-A- 3 198 739
US-A- 3 311 597          US-A- 3 598 737

**Description**

This invention is concerned with polymers derived from (a) one or more monomer selected from $(C_1-C_{24})$alkyl methacrylates and $(C_1-C_{24})$alkyl acrylates, and (b) one or more monomer selected from hydroxy$(C_2-C_6)$alkyl methacrylates and hydroxy$(C_2-C_6)$alkyl acrylates, wherein the number of carbon atoms in the alkyl groups averages from 8 to 14. These polymers are useful as ashless dispersant additives to lubricating oils for providing improved engine cleanliness and low temperature performance properties without adversely affecting fluoro-polymer seals and gaskets. The novel polymers are normally dissolved or dispersed in refined mineral lubricating oil for eventual incorporation in a mineral or synthetic base oil.

Desirable lubricating oils for internal combustion engines have a low pour point, good fluidity at low temperatures and good dispersancy characteristics. Good dispersancy characteristics, as manifested by engine cleanliness, coupled with good low temperature performance would allow the oil to flow at the lowest possible temperature of operation, usually at engine start-up. To achieve these desired properties, along with several others, modification of the lubricating oil is necessary through the incorporation of several additives. The types of additives commonly used include viscosity index improvers, pour point depressants and detergent-inhibitor packages, which include ashless dispersants, oxidation inhibitors, antiwear agents, etc.

Ashless dispersants are based on metal-free organic compounds in contrast to dispersant or detergent additives which are derived from inorganic metal salts, organic sulfonate salts and the like. Ashless dispersants are generally based on polymeric backbones containing polar functionality in the side chains. Polar functionality, frequently a basic nitrogen moiety, is necessary in order to solubilize and suspend the dirt and sludge deposits throughout the base oil. Ashless dispersants derived from ethylene-propylene terpolymers containing pendant aminoester groups are disclosed in U.S.-A- 4,002,569. U.S.-A- 4,248,725 discloses another class of nitrogen-containing ashless dispersants which are derived from poly-isobutylene and other polyolefin backbone polymers which have been functionalized with succinimide derivatives.

However, ashless dispersant additive compositions based on incorporation of nitrogen-containing basic comonomers, such as polyisobutene-based succinimides, have certain disadvantages, sometimes causing objectionable odor, discoloration or degradation of the effectiveness of gaskets and seals found in automobile engines that are based on fluorohydrocarbon polymers, such as Viton fluoroelastomer. The advent of small automobile engines operating at high temperatures has required increased use levels of dispersant additives (relative to larger engines) in order to maintain engine cleanliness, thus magnifying the incompatibility of some commercial nitrogen-containing dispersant additives with engine seal materials; these higher use levels also significantly increase the low-temperature viscosity which leads to poor cold-cranking engine startup.

Poly(alkyl methacrylate) polymers having improved pour point properties based on copolymerizing alkyl methacrylates with from 9 to 23 mole percent methacrylic acid followed by ethoxylation, wherein the average number of carbon atoms in the alkyl group is 12.5 to 14.3, are disclosed in US-A-3,598,737. A lauryl methacrylate-stearyl methacrylate copolymer with 23 mole percent hydroxyethyl methacrylate is disclosed in US-A-3,249,545 for use in oil formulations containing bisphenol antioxidants.

In another approach to providing dispersant viscosity index improvers, EP-A- 418610 discloses the use of polyalkyl(meth)acrylates characterized in that the polyalkyl(meth)acrylates are copolymers of 80-95.5 parts by weight of $(C_6-C_{24})$alkyl(meth)acrylates (I), and 0.5-20 parts by weight of at least one hydroxy$(C_2-C_6)$alkyl(meth)acrylate or a multialkoxylized alkyl(meth)acrylate (II), wherein the sum of the monomers (I) and (II) is 100 parts by weight, with an optional 0 to 20 parts by weight being derived from one or more $(C_1-C_5)$alkyl(meth)acrylate.

Poly(methacrylate) polymers as additives for machine tool working oils based on 92-99% $(C_1-C_{18})$alkyl methacrylate and 1-8% hydroxy$(C_2-C_3)$alkyl methacrylate polymers having number-average molecular weights $(M_n)$ of 20,000-60,000 are disclosed in Japanese Patent JP 52-018202B. These polymeric additives are disclosed as being unsuitable for use as additives for engine oils.

None of these latter approaches combines dispersancy and compatibility with fluoropolymer seal materials with good low-temperature performance. The present invention enables this combination of properties to be provided.

According to the present invention there is provided a polymer obtainable by polymerizing monomers comprising:

(a) from 70 to 90 weight percent of one or more first monomer selected from $(C_1-C_{24})$alkyl methacrylates and $(C_1-C_{24})$alkyl acrylates, wherein the first monomer(s) contains less than 10 weight percent $(C_1-C_3)$alkyl methacrylate or $(C_1-C_3)$alkyl acrylate; and

(b) from 10 to 30 weight percent of one or more second monomer selected from hydroxy$(C_2-C_6)$alkyl methacrylates and hydroxy$(C_2-C_6)$alkyl acrylates, and

wherein the number of carbon atoms in the alkyl groups averages from 8 to 14, and the polymer has a weight average molecular weight from 20,000 to 200,000 and which comprises, based on the total weight of monomers (a) and (b), up to 30 weight percent of $(C_{16}-C_{24})$alkyl methacrylates, $(C_{16}-C_{24})$alkyl acrylates, or a mixture thereof.

These polymers are useful as additives to lubricating oils providing good dispersancy and low temperature performance properties without adversely affecting fluoropolymer seals and gaskets. The novel polymers, when used in lubricating oils, are normally dissolved or dispersed in refined mineral lubricating oil for eventual incorporation in a mineral or synthetic base oil.

Each of the monomers used in the present invention can be a single monomer or a mixture having different numbers of carbon atoms in the alkyl portion. The alkyl portions of both the (a) methacrylate and acrylate monomers and the (b) hydroxyalkyl methacrylate and hydroxyalkyl acrylate monomers are an important factor in the performance characteristics of the polymers of the invention. By this is meant that the average number (n) of carbon atoms ($C_n$) in the side chain alkyl and hydroxyalkyl groups of the acrylate or methacrylate backbone polymer is selected to maintain solubility of the polymer additive in both new oil and in used oil, where the additive has already functioned as a sludge dispersant. Generally, when the average $C_n$ is less than about 7, the resultant polymers may have poor solubility in some base oils and the additives may not be fully functional as dispersants. When the average $C_n$ is significantly greater than about $C_{16}$ in an engine oil formulation, poorer low temperature fluidity properties may be observed. By low temperature is meant temperatures below about -5°C. Consequently, the average number of carbon atoms in the alkyl group of the acrylate or methacrylate monomers used to prepare the polymeric additives is from 8 to 14, preferably from 9 to 12. In the instance where the monomers are all acrylates or substantially all acrylates, then the average carbon number of the side chain alkyl groups of the backbone polymer will vary somewhat and the average number of carbon atoms will be that which matches the solubility parameters of the corresponding methacrylate backbone polymers. Such solubility parameters are readily known and understood by those in the art.

Preferably, monomer(s) (a) is/are selected from $(C_1-C_{20})$alkyl methacrylates and $(C_1-C_{20})$alkyl acrylates, and monomer(s) (b) is/are selected from hydroxy$(C_2-C_6)$alkyl methacrylates and hydroxy$(C_2-C_6)$alkyl acrylates. The alkyl portion of either monomer may be linear or branched. Alkyl methacrylates and hydroxyalkyl methacrylates are preferred.

To obtain a balance of desired performance characterisistics relating to good dispersancy and low temperature performance, mixtures of alkyl methacrylates and alkylacrylates are preferably used. Consequently, in one embodiment of the invention, monomer (a) comprises (i) 0 to 5% of an alkyl methacrylate or alkyl acrylate in which the alkyl group contains from 1 to 6 carbon atoms, or mixture thereof, wherein the monomer(s) contains less than 10% $(C_1-C_3)$alkyl methacrylate or $(C_1-C_3)$alkyl acrylate, (ii) from 35 to 70% of an alkyl methacrylate or alkyl acrylate in which the alkyl group contains from 7 to 15 carbon atoms, or mixture thereof, and (iii) 20 to 30% of an alkyl methacrylate or alkyl acrylate in which the alkyl group contains from 16 to 24 carbon atoms, or mixture thereof, and monomer (b) comprises from 10 to 20% of a hydroxyalkyl methacrylate or hydroxyalkyl acrylate in which the alkyl group contains 2 to 6 carbon atoms and is substituted with one or more hydroxyl groups, or mixture thereof. All percentages are by weight, are based on the total weight of the polymer, and the total of (i), (ii), (iii) and (b) equals 100 percent of the weight of the polymer. The amount of (i) in the polymer is more preferably 0%; the amount of (ii) is more preferably from 50 to 60%; and the amount of (b) is more preferably 15 to 20%.

Preferably, the polymer comprises, based on the total weight of monomers (a) and (b), from 10 to 30 weight percent of $(C_{16}-C_{20})$alkyl methacrylates, $(C_{16}-C_{20})$alkyl acrylates, or mixture thereof.

Examples of monomer (a), the alkyl methacrylate and/or alkyl acrylate where the alkyl group contains from 1 to 6 carbon atoms, also called the "low-cut" alkyl methacrylate or alkyl acrylate, are methyl methacrylate (MMA), methyl and ethyl acrylate, propyl methacrylate, butyl methacrylate (BMA) and acrylate (BA), isobutyl methacrylate (IBMA), hexyl and cyclohexyl methacrylate, cyclohexyl acrylate and combinations thereof. Preferred low-cut alkyl methacrylates include methyl methacrylate, butyl methacrylate and isobutyl methacrylate; more preferred are $(C_4-C_6)$alkyl methacrylates, such as butyl methacrylate and isobutyl methacrylate.

In order to achieve the combination of polymer solubility, dispersancy and low temperature properties (such as pour point and cold-cranking engine start-up performance) of polymers of the present invention, levels of low-cut $(C_1-C_3)$alkyl(meth)acrylates, such as methyl methacrylate, are from zero to 10%, preferably from zero to 5%, by weight of the polymer. Polymer solubility refers to the property in which the more hydrophilic or polar monomers, such as those having a low carbon content $(C_1-C_3)$ in the alkyl portion, provide a polymer that is less soluble in the base oils than polymers from the more hydrophobic monomers, such as those having a high carbon content ($C_4$ or greater) in the alkyl chain. Therefore, if greater than 10% methyl methacrylate is incorporated into some polymers, depending upon the level of other polar monomers used, e.g., hydroxyalkyl methacrylate, solubility in some base oils may be insufficient for the additive to be fully functional as an ashless dispersant. On the other hand, if low-cut $(C_4-C_6)$alkyl methacrylates are used, i.e., such as butyl or isobutyl methacrylate, then zero to 20% by weight, preferably zero to 10%, of these monomers may be used to provide an optimum balance of the aforementioned properties, including solubility in the base oils.

Examples of monomer (a), the alkyl methacrylate and/or alkyl acrylate where the alkyl group contains from 7 to 15 carbon atoms, also called the "mid-cut" alkyl methacrylates or alkyl acrylates, are 2-ethylhexyl acrylate (EHA), 2-ethylhexyl methacrylate, octyl methacrylate, decyl methacrylate, isodecyl methacrylate (IDMA, based on branched $(C_{10})$alkyl isomer mixture), undecyl methacrylate, dodecyl methacrylate (also known as lauryl methacrylate), tridecyl methacrylate, tetradecyl methacrylate (also known as myristyl methacrylate), pentadecyl methacrylate, and combinations thereof. Also useful are: dodecyl-pentadecyl methacrylate (DPMA), a mixture of linear and branched isomers of dodecyl, tridecyl, tetradecyl and pentadecyl methacrylates; and lauryl-myristyl methacrylate (LMA), a mixture of dodecyl and tetradecyl methacrylates. The preferred mid-cut alkyl methacrylates are lauryl-myristyl methacrylate and isodecyl methacrylate.

Examples of monomer (a), the alkyl methacrylate and/or alkyl acrylate where the alkyl group contains from 16 to 24 carbon atoms, also called the "high-cut" alkyl methacrylates or alkyl acrylates, are hexadecyl methacrylate, heptadecyl methacrylate, octadecyl methacrylate, nonadecyl methacrylate, cosyl methacrylate, eicosyl methacrylate, and combinations thereof. Also useful are: cetyl-eicosyl methacrylate (CEMA), a mixture of hexadecyl, octadecyl, cosyl and eicosyl methacrylate; and cetyl-stearyl methacrylate (SMA), a mixture of hexadecyl and octadecyl methacrylate. The preferred high-cut alkyl methacrylates are cetyl-eicosyl methacrylate and cetyl-stearyl methacrylate.

The mid-cut and high-cut alkyl methacrylate and alkyl acrylate monomers described above are generally prepared by standard esterification procedures using technical grades of long chain aliphatic alcohols, and these commercially available alcohols are mixtures of alcohols of varying chain lengths containing between 10 and 15 or 16 and 20 carbon atoms in the alkyl group. Consequently, for the purposes of this invention, alkyl methacrylate is intended to include not only the individual alkyl methacrylate product named, but also to include mixtures of the alkyl methacrylates with a predominant amount of the particular alkyl methacrylate named. The use of these commercially available alcohols to prepare acrylate and methacrylate esters results in the LMA, DPMA, SMA and CEMA monomer mixtures described above.

Examples of monomer (b) are those alkyl methacrylate and acrylate; monomers with one or more hydroxyl groups in the alkyl radical, especially those where the hydroxyl group is found at the β-position (2-position) in the alkyl radical. In the hydroxyalkyl methacrylate and acrylate monomers the substituted alkyl group is a $(C_2-C_6)$alkyl, which may be branched or unbranched. Among the hydroxyalkyl methacrylate and acrylate monomers suitable for use in the present invention are 2-hydroxyethyl methacrylate (HEMA), 2-hydroxyethyl acrylate, 2-hydroxypropyl methacrylate, 1-methyl-2-hydroxyethyl methacrylate, 2-hydroxypropyl acrylate, 1-methyl-2-hydroxyethyl acrylate, 2-hydroxybutyl methacrylate and 2-hydroxybutyl acrylate. The preferred hydroxyalkyl methacrylate and acrylate monomers are HEMA, 1-methyl-2-hydroxyethyl methacrylate and 2-hydroxypropyl methacrylate. A mixture of the latter two monomers is commonly referred to as "hydroxypropyl methacrylate" or HPMA, which is the more preferred hydroxyalkyl methacrylate, as are each of the components of HPMA.

Preferred polymers are those where monomer (a) comprises monomers wherein (i) is present in an amount of 0 to 5% by weight and is selected from one or more of methyl methacrylate, butyl methacrylate and isobutyl methacrylate, (ii) is present in an amount of 35 to 70% by weight and is selected from one or more of 2-ethylhexyl methacrylate, isodecyl methacrylate, dodecyl-pentadecyl methacrylate and lauryl-myristyl methacrylate, (iii) is present in an amount of 20 to 35% by weight and is selected from one or more of cetyl-stearyl methacrylate and cetyl-eicosyl methacrylate, and monomer (b) is present in an amount of 10 to 20% by weight and is selected from one or more of 2-hydroxyethyl methacrylate, 2-hydroxyethyl acrylate, 2-hydroxypropyl methacrylate, 1-methyl-2-hydroxyethyl methacrylate, 2-hydroxypropyl acrylate, 1-methyl-2-hydroxyethyl acrylate, 2-hydroxybutyl methacrylate and 2-hydroxybutyl acrylate, and wherein the total of (i), (ii), (iii) and (b) equals 100% by weight of the polymer.

A preferred polymer is one which comprises 50 to 60% lauryl-myristyl methacrylate, 20 to 30% cetyl-eicosyl methacrylate, and 10 to 20%, preferably 15 to about 20%, of monomer (b) which is preferably a mixture of 2-hydroxypropyl methacrylate and 1-methyl-2-hydroxyethyl methacrylate.

Another preferred polymer is one which comprises 80 to 90% monomer (a) which is an alkyl methacrylate or alkyl acrylate in which the.alkyl group contains from 10 to 14 carbon atoms, or mixture thereof, and 10 to 20% by weight of monomer (b) which is a hydroxy$(C_2-C_3)$alkyl methacrylate or acrylate, or mixture thereof.

Another preferred polymer is one which comprises 80 to 90% of monomer (a) which is lauryl-myristyl methacrylate, and 10 to 20% of monomer (b) which is a mixture of 2-hydroxypropyl methacrylate and 1-methyl-2-hydroxyethyl methacrylate.

Besides the average number (n) of carbon atoms $(C_n)$ in the side chain alkyl and hydroxyalkyl groups of the acrylate or methacrylate backbone polymer, the nature of the alkyl portion of the methacrylate and acrylate monomers is an important factor in the performance characteristics of the polymers of the invention. For example, a mix of $(C_1-C_6)$alkyl methacrylates and/or acrylates, $(C_7-C_{15})$alkyl methacrylates and/or acrylates, and $(C_{16}-C_{24})$alkyl methacrylates and/or acrylates may be copolymerized with hydroxyalkyl(meth)acrylate such that the polymer has an average carbon number content in the alkyl side chains of about 10. In this case there is a good balance of polymer additive solubility characteristics in both new oil and in used oil, where the additive has already functioned as a sludge dispersant. In addition, the $(C_{16}-C_{24})$alkyl methacrylate portion of the polymer is wax-like and will interact with the waxy components in the base oil which can result in improved low-temperature flow properties, such as pour point. If, on the other hand, a single ($C_{11}$) or ($C_{13}$)alkyl (meth)acrylate monomer is copolymerized with hydroxyalkyl(meth)acrylate to provide an average carbon number in the alkyl side chains of about 10, the resulting polymer additive would have satisfactory oil solubility but little wax interaction capability and therefore would not significantly influence low- temperature flow properties, even though the $C_n$ values are similar for both types of polymers.

Consequently, to obtain good low temperature performance properties while retaining a good balance of solubility in new and used oils, a portion of monomer (a) comprises ($C_{16}$-$C_{24}$)alkyl methacrylates and/or ($C_{16}$-$C_{24}$)alkyl acrylates, preferably wherein the alkyl portion is $C_{16}$ to $C_{20}$. The amount of such ($C_{16}$-$C_{24}$)alkyl methacrylates and/or alkyl acrylates is up to 30, preferably from 10 to 30, weight percent based on the total weight of monomers (a) and (b). Since the high-cut alkyl methacrylate and acrylates are wax-like, they act as pour point depressants changing the structure or morphology of the wax in the base oil at low temperatures. The amount of the high-cut alkyl methacrylate or acrylate used is dependent upon the particular high-cut alkyl methacrylate or acrylate selected, the properties of the base oil and the desired low temperature properties. Generally, the greater the number of carbons in the alkyl portion, the more wax-like properties the monomers have and less of this monomer is used. Since these high-cut alkyl (meth)acrylates are wax-like, too much can cause congealing in the base oil and loss of low temperature fluidity.

The optimisation of the ratio of the high-, mid- and low-cut alkyl methacrylates is dependent on the base oils used in the formulation and the level of performance desired. The balanced formulation will preferably have an alkyl carbon content ($C_n$) of from 9 to 12.

In general, polymeric lubricating oil additives of the present invention have weight-average molecular weights ($M_w$) from 20,000 to 200,000, e.g. greater than 20,000 and up to 200,000 (as determined by gel permeation chromatography (GPC), using poly(alkylmethacrylate) standards). $M_w$ ranges are dictated by end-use applications. In one embodiment of the invention the polymer has a $M_w$ of from 20,000 to 100,000, e.g. greater than 20,000 and up to 100,000; these polymers are especially useful as ashless dispersant additives for shear stable hydraulic fluids. In another embodiment of the invention the polymer has a $M_w$ from greater than 100,000 to 200,000; these polymers are especially useful as ashless dispersants for crankcase engine oils and automatic transmission fluids. Polymers of the invention with $M_w$ significantly greater than 200,000 would have poorer shear stability than polymers having a lower $M_w$. If high levels of high molecular weight additives are used to meet the dispersancy requirements for small engines, they may contribute too much thickening to formulated oils in addition to introducing poor shear stability.

Those skilled in the art will recognize that the molecular weights set forth throughout this specification are relative to the methods by which they are determined. For example, molecular weights determined by gel permeation chromatography (GPC) and molecular weights calculated by other methods, may have different values. It is not molecular weight *per se* but the handling characteristics and performance of a polymeric additive (dispersancy and fluidity under use conditions) that is important.

The shear stability index (SSI) can be directly correlated to polymer molecular weight and is a measure of the percent loss in polymeric additive-contributed viscosity due to shear and can be determined by measuring sonic shear stability according to ASTM D-2603-91 (published by the American Society for Testing and Materials) with the shearing time set at between 3 and 12.5 minutes. In general, higher molecular weight polymers undergo the greatest relative reduction in molecular weight when subjected to high shear conditions and, therefore, these higher molecular weight polymers also exhibit the largest SSI values. The SSI range (according to ASTM D-2603-91, when measured at 12.5 minutes) for lubricating oils containing the polymers of this invention is from zero to 25%; the more preferred polymers have an SSI from 15 to 25%. In order to determine the shear stability of the individual polymer additives, SSI measurements were made on lubricating oil formulations containing essentially no other polymer additives, i.e., no viscosity index improvers and the like were included. The desired SSI can be achieved by varying the polymerisation reaction conditions, e.g., level of chain transfer agent.

The present invention also provides a process for preparing polymers according to the invention, the process comprising polymerizing monomers comprising

(a) from 70 to 90 weight percent of one or more first monomer selected from ($C_1$-$C_{24}$)alkyl methacrylates and ($C_1$-$C_{24}$)alkyl acrylates, wherein the first monomer(s) contains less than 10 weight percent ($C_1$-$C_3$)alkyl methacrylate or ($C_1$-$C_3$)alkyl acrylate; and
(b) from 10 to 30 weight percent of one or more second monomer selected from hydroxy($C_2$-$C_6$)alkyl methacrylates and hydroxy($C_2$-$C_6$)alkyl acrylates,

wherein the number of carbon atoms in the alkyl groups averages from 8 to 14, and the polymer has a weight average molecular weight from 20,000 to 200,000 and comprises, based on the total weight of monomers (a) and (b), up to 30 weight percent of ($C_{16}$-$C_{24}$)alkyl methacrylates, ($C_{16}$-$C_{24}$)alkyl acrylates, or a mixture thereof.

The polymers of this invention may be prepared by mixing monomers (a) and (b) in the presence of a polymerization initiator, a diluent and optionally a chain transfer agent. The reaction can be run under agitation in an inert atmosphere at a temperature of from 60 to 140°C and more preferably from 115 to 125°C. Typically, the batch will exotherm to the polymerization temperature of 115-120°C. The reaction is run generally for 4 to 10 hours or until the desired degree of polymerization has been reached. As is recognized by those skilled in the art, the time and temperature of the reaction are dependent on the choice of initiator and can be varied accordingly.

Initiators useful for this polymerization are any of the well known free-radical-producing compounds such as peroxy, hydroperoxy and azo initiators including acetyl peroxide, benzoyl peroxide, lauroyl peroxide, t-butyl peroxyisobutyrate, caproyl peroxide, cumene hydroperoxide, 1,1-di(*t*-butylperoxy)-3,3,5-trimethylcyclohexane, azobisisobutyronitrile and *t*-butyl peroctoate. The initiator concentration is normally between 0.025 and 1% by weight, based on the total weight of the monomers, and more preferably from 0.05 to 0.25%. Chain transfer agents may also be added to the polymerization reaction to control the molecular weight of the polymer. The preferred chain transfer agents are alkyl mercaptans such as lauryl (dodecyl) mercaptan, and the concentration of chain transfer agent used may be from 0.1 to 2% by weight.

Among the diluents suitable for use during the polymerization and for the preparation of concentrates are aromatic hydrocarbons, such as benzene, toluene, xylene, and aromatic naphthas, chlorinated hydrocarbons such as ethylene dichloride, esters such as ethyl propionate or butyl acetate, and also petroleum oils, vegetable oils or synthetic lubricants.

After the polymerisation, the resultant polymer solution typically has a polymer content of from 50 to 95% by weight. The polymer can be isolated and used directly in mineral, vegetable or synthetic base oils, or the polymer and diluent solution can be used in a concentrate form. When used in the concentrate form the polymer concentration can be adjusted to any desirable level with additional diluent, for example, paraffinic base oil. The preferred concentration of polymer in the concentrate is from 30 to 70% by weight. When the concentrate is directly blended into a lubricating base oil, the more preferred diluent is any mineral oil, such as 100 to 150 neutral oil (100N or 150N oil), which is compatible with the final lubricating base oil.

When a polymer of the present invention is added to lubricating base oils, whether it is added as pure polymer or as concentrate, the final concentration of the polymer (active ingredient) in the lubricating base oil preferably is from 0.5 to 15% by weight, and more preferably from 1 to 8%, depending on the specific use application requirements. Lubricating base oils may be mineral oil types (paraffinic or naphthenic), vegetable oil types or synthetic types (polyolefin). Some lubricating oils contain pour point depressants. However, in formulations where polymers of the present invention are used, the need for addition of a separate pour point depressant may be eliminated if cetyl-eicosyl methacrylate is part of the polymer composition.

In a preferred embodiment of the invention, the polymers are useful as ashless dispersants at concentrations where sufficient dispersancy in lubricating oil compositions is provided. For purposes of the present invention, "sufficient dispersancy" of a lubricating oil is defined as having Co-ordinating Research Council (CRC Manual No. 12, Sludge Rating Manual, 1976) merit rating values of greater than 6.0 and greater than 8.0, respectively, for rocker arm cover sludge and average sludge measured at 12 days in a Sequence VE Test according to ASTM Research Report No. D-2:1002. Preferably the CRC merit rating values are greater than 7.0 and greater than 9.0, respectively, and more preferably greater than 8.0 and greater than 9.2, respectively, for rocker arm cover sludge and average sludge.

In a more preferred embodiment, the polymers of the invention are useful as ashless dispersants in lubricating oil compositions at concentrations which provide sufficient dispersancy to the lubricating oil composition and contribute less than about 50% of the overall viscosity of the lubricating oil composition. Preferably the shear stability of the polymers is represented by shear stability index values (SSI) of less than 25%. For the purposes of this invention, "shear stability" of the polymers is defined as measured in the lubricating oil compositions essentially in the absence of other polymer additives according to ASTM D-2603-91, where the SSI value (12.5 minutes) is less than 25%.

In another preferred embodiment of the invention, polymers having $M_w$ from greater than 100,000 to 200,000 are useful as ashless dispersants at concentrations where sufficient dispersancy in lubricating oil compositions is provided when the polymer concentration in the lubricating oil composition is from 0.5 to 4% by weight.

Preferred lubricating oil and concentrate compositions containing polymers of the present invention are those where the polymers are used as ashless dispersants at concentrations where sufficient dispersancy to the lubricating oil composition is provided. In another preferred embodiment, lubricating oil and concentrate compositions containing polymers of the present invention are those where the polymers are used as ashless dispersants at concentrations where sufficient dispersancy to the lubricating oil composition is provided and the polymers contribute less than 50% of the overall viscosity of the lubricating oil composition. Preferably the shear stability of the polymers used is represented by shear stability index values (SSI) of less than about 25% as measured (at 12.5 minutes) according to ASTM D-2603-91.

In yet another preferred embodiment of the invention, lubricating oil and concentrate compositions containing polymers of the present invention having $M_w$ from greater than 100,000 to 200,000 are those where the polymers are used at concentrations where sufficient dispersancy in lubricating oil compositions is provided and the polymers contribute less than 50% of the overall viscosity of the lubricating oil composition to which the polymers have been added.

In this embodiment lubricating oil compositions preferably contain from 0.5 to 4% by weight of the polymers.

The ashless dispersants of the present invention can be used as additives in many oil formulations, such as: multigrade and monograde engine oils for passenger cars and heavy duty diesel engines, automatic transmission fluids, two-cycle engine oils, power transfer fluids, railroad engine oils, hydraulic fluid and circulating oils, natural gas engine oils, marine engine oils, universal tractor fluids, automobile gear oils, industrial gear oils, piston aviation engine oils, turbine aviation engine oils and the like.

The following Examples are presented to illustrate certain embodiments of the present invention. All ratios and percentages are by weight, unless otherwise indicated, and all reagents are of good commercial quality unless otherwise indicated. Examples 1 through 7 give synthesis information for preparing polymers of the present invention and Examples 8 through 11 give performance data on oil formulations containing polymers of the invention.

The polymers of the present invention were evaluated by a wide variety of performance tests commonly used for lubricating oils and they are discussed below. For these evaluations the polymers were mixed with (1) a base oil, (2) a controlled amount of a non-dispersant viscosity index (VI) improver and (3) a dispersant-inhibitor (DI) package of other additives in order to approximate commercial lubricating oil formulations. A non-dispersant VI improver was used in these evaluations to minimise dispersancy contributions from sources other than the polymers being evaluated. Commercial DI packages typically consisted of an antiwear or antioxidant component, such as zinc dialkyl dithiophosphate; a nitrogen-containing ashless dispersant, such as polyisobutene based succinimide; a detergent, such as metal phenate or sulfonate; a friction modifier, such as sulfur-containing organic; and an antifoam agent, such as silicone fluid.

Since commercial DI packages typically contain an ashless dispersant, contributions to the dispersancy properties of the lubricating oil compositions of the present invention can be provided by a combination of the ashless dispersant polymers of the present invention, the ashless dispersant present in the DI package and the VI improver (if of a dispersant type). In cases where the DI package contains no ashless dispersant and a non-dispersant VI improver is used, essentially all of the dispersancy properties of the lubricating oil will be provided by polymers of the present invention, at concentrations from 2 to 15% by weight. In cases where the DI package contains an ashless dispersant or a dispersant VI improver, polymers of present invention are used at concentrations from 0.5 to 5% by weight to provide sufficient dispersancy to the lubricating oil formulation.

The base oil, VI improver and DI package together with the ashless dispersant polymers of the present invention all contribute to the required overall viscosity of the particular lubricating oil formulation. Typically, the base oil, VI improver and DI package contribute from 50 to 90% of the overall viscosity, with the remainder of the viscosity being provided by the ashless dispersant polymer. When $M_w$ of the polymer is from 100,000 to 200,000, relatively low concentrations (from 0.5 to 4% by weight) of the polymer may be used in order to provide sufficient dispersancy properties without exceeding the overall viscosity limitations of the particular lubricating oil formulation. For example, an SAE 5W-30 lubricating oil could be formulated to an overall viscosity of $10.5 \times 10^{-6} m^2 s^{-1}$ (10.5 centistokes) (100°C) and an SAE 15W-40 oil could be formulated to $14.5 \times 10^{-6} m^2 s^{-1}$ (14.5 centistokes) (100°C). When $M_w$ of the polymer is from 20,000 to 100,000, e.g. greater than 20,000 and up to 100,000, higher concentrations (from 2 up to 15% by weight) of the polymer may be used to provide sufficient dispersancy properties without exceeding the viscosity limitations of the lubricating oil formulation.

Performance characteristics of ashless dispersants of the present invention were compared to commercial nitrogen-containing ashless dispersants in a test patterned after the Sequence VE Test, which measures the sludge dispersant characteristics of additives under low and medium temperature operating conditions according to the conditions described in ASTM Research Report No. D-2:1002. The engine parts were evaluated and rated at the end of 12 days (unless indicated otherwise) and cleanliness was determined according to a CRC merit system where a value of 10.0 represented the cleanest engine.

Compositions of the present invention were also subjected to a compatibility test for fluorohydrocarbon polymers, in particular, Viton fluoroelastomers. This test (Engine Seal Compatibility Test, Example 9) was used to evaluate the degree of compatibility of the lubricating oil additives of the present invention with materials used in engine seals, gaskets, etc. The test is based on the immersion of seal or gasket materials in fluids containing candidate lubricating oil additive samples for 7 days, after which their elongation characteristics (percent elongation-at-break or %ELB) were determined. Values of the relative change in %ELB of zero to -5% were representative of neutral conditions, i.e., compatible with the engine seals.

Compositions of the present invention were subjected to a test designed to measure viscosity performance at low temperatures at high shear rates, i.e., the CCS test. In these circumstances the viscosity of the formulated oil should be low enough to allow sufficient start-up of the engine while providing adequate lubrication of all engine parts.

The Cold-Cranking Simulator (CCS) test (Example 10) estimates the apparent viscosity of engine oils under conditions where engine cranking and start-up is most difficult and is based on the procedure defined in ASTM D-5293-92. For example, the CCS viscosity specification for SAE 5W-30 grade oil is less than 3.5 Pa s (35 poise) at -25°C, as required by SAE (Society of Automotive Engineers) J300 Engine Oil Viscosity Classification (January 1991). Some ashless dispersants based on nitrogen- containing additives, such as polyisobutene-succinimide types, do not satisfy CCS test requirements at the high use levels required for small engines, nor do they pass the Engine Seal Compatibility Test (*infra*).

Since additives of the invention provide low CCS viscosities (Example 10), higher concentrations of base oils having higher viscosities may be used. These higher viscosity base oils offer the advantage of lower cost compared to lighter base oils, but heretofore could not be used as widely in conjunction with prior art ashless dispersants. Consequently, the polymers of the invention allow more extensive use of these heavier base oils in formulated oils, resulting in lower costs, reduced oil consumption and also cleaner engines since the heavier base oils are less volatile than lighter viscosity base oils and reduce piston deposit formation at high operating temperatures, particularly in diesel engines.

The pour point of an oil formulation is an indication of its relative ability to remain fluid at very low temperatures and is designated as the temperature at which the oil will no longer flow. Polymers of the invention were evaluated for their pour point depressancy properties as described in Example 11.

## EXAMPLE 1

A monomer mix was prepared from 30.0 parts cetyl-eicosyl methacrylate (100% basis, 95% purity), 50.0 parts lauryl-myristyl methacrylate (100% basis, 98% purity), 20.0 parts hydroxypropyl methacrylate, 1.90 parts dodecyl mercaptan, 0.29 parts *t*-butyl peroctoate (*t*-butyl peroxy-2-ethylhexanoate) and 10.0 parts paraffinic base oil (100N oil). Part of the above monomer mix (30%) was charged to a nitrogen flushed kettle fitted with a thermometer and Thermowatch to control temperature, a water-cooled reflux condenser with nitrogen outlet, a stirrer, an nitrogen inlet, and an addition funnel to control the addition of the monomer mix. The contents of the kettle were heated to 105°C and any exotherm was controlled by cooling to maintain the temperature below 120°C; if the exotherm had not started after about 5 minutes at 105°C, the bath was heated slowly to 115-120°C until the exotherm started. When the temperature reached 115°C during the exotherm the remainder of the monomer mix was then added uniformly over a 60 minute period with cooling to control the exotherm at below about 125°C. The temperature was then maintained at 115-120°C for an additional 30 minutes. At this point an initiator feed of 0.20 parts *t*-butyl peroctoate in 8.4 parts 100N oil was added to the flask over 60 minutes at 115-120°C, after which the batch was held at the same temperature for an additional 30 minutes. Monomer conversion was 98.1% and approximately 105 parts of 100N oil was then added to bring the batch to a final polymer solids content to 43.5%, a viscosity of 79 x $10^{-6}$ $m^2$ $s^{-1}$ (79 centistokes) [at 98.9°C (210°F)] and an SSI (12.5 minutes) of 1.4. The calculated $C_n$ value (based on molar composition) for this polymer is 10.4.

## EXAMPLE 1A

A monomer mix was prepared from 15.0 parts cetyl-eicosyl methacrylate (100% basis, 95% purity), 65.0 parts lauryl-myristyl methacrylate (100% basis, 98% purity), 20.0 parts hydroxypropyl methacrylate, 0.45 parts dodecyl mercaptan, 0.29 parts *t*-butyl peroctoate (*t*-butyl peroxy-2-ethylhexanoate) and 10.0 parts paraffinic base oil (100N oil). Part of the above monomer mix (30%) was charged to a nitrogen flushed kettle fitted with a thermometer and Thermowatch to control temperature, a water-cooled reflux condenser with nitrogen outlet, a stirrer, an nitrogen inlet, and an addition funnel to control the addition of the monomer mix. The contents of the kettle were heated to 105°C and any exotherm was controlled by cooling to maintain the temperature below 120°C; if the exotherm had not started after about 5 minutes at 105°C, the bath was heated slowly to 115-120°C until the exotherm started. When the temperature reached 115°C during the exotherm the remainder of the monomer mix was then added uniformly over a 60 minute period with cooling to control the exotherm at below about 125°C. The temperature was then maintained at 115-120°C for an additional 30 minutes. At this point an initiator feed of 0.50 parts *t*-butyl peroctoate in 30.0 parts 100N oil was added to the flask over 90 minutes at 115-120°C, after which the batch was held at the same temperature for an additional 30 minutes. Monomer conversion was 97.1% and approximately 55.7 parts of 100N oil was then added to bring the batch to a final polymer solids content to 48.9%, a viscosity of 1.114 x $10^{-3}$ $m^2$ $s^{-1}$ (1,114 centistokes) [at 98.9°C (210°F)] and an SSI (5 minutes) of 5.7. The calculated $C_n$ value for this polymer is 10.0.

## EXAMPLE 2

The same procedure as Example 1 was followed except that the monomer mix was 30 parts cetyl-eicosyl methacrylate, 60 parts lauryl-myristyl methacrylate and 10 parts hydroxypropyl methacrylate. The final monomer conversion was 96.8% and the batch had a final polymer content of 44.5% after dilution with 100N oil, a viscosity of 55 x $10^{-6}$ $m^2$ $s^{-1}$ (55 centistokes) [at 98.9°C (210°F)] and an SSI (12.5 minutes) of approximately zero. The calculated $C_n$ value for this polymer is 12.0.

### EXAMPLE 3

The same procedure as Example 1 was followed except that the monomer mix was 30 parts cetyl-eicosyl methacrylate, 65 parts lauryl-myristyl methacrylate, 5 parts hydroxypropyl methacrylate and 1.75 parts dodecyl mercaptan. In addition, after the dilution with 100N oil, the batch was held at 115-120°C for 30 minutes. The final monomer conversion was 94.6% and the batch had a final polymer content of 47.6% and a viscosity of $59 \times 10^{-6} \ m^2 \ s^{-1}$ (59 centistokes) [at 98.9°C (210°F)]. The calculated $C_n$ value for this polymer is 12.8.

### EXAMPLE 4

The same procedure as Example 1 was followed except that the monomer mix was 30 parts cetyl-eicosyl methacrylate, 50 parts lauryl-myristyl methacrylate, 20 parts hydroxypropyl methacrylate, 0.8 parts dodecyl mercaptan and 0.17 parts 100N oil; in addition, 3.05 parts of 100N oil were charged to the flask with the initial 30% of the monomer mix before the gradual addition of the remaining monomer mix. The final monomer conversion was 95.0%. The calculated $C_n$ value for this polymer is 10.4.

### EXAMPLE 5

The same procedure as Example 1 was followed except that the monomer mix was 30 parts cetyl-eicosyl methacrylate, 50 parts lauryl-myristyl methacrylate, 20 parts hydroxypropyl methacrylate, 0.9 parts dodecyl mercaptan and 0.17 parts 100N oil; in addition, 3.05 parts of 100N oil were charged to the flask with the initial 30% of the monomer mix before the gradual addition of the remaining monomer mix. The final monomer conversion was 96.7%. The polymer solutions from Examples 4 and 5 were combined and diluted with 100N oil to a final polymer content of 45%, a viscosity of $2.29 \times 10^{-4} \ m^2 \ s^{-1}$ (229 centistokes) [at 98.9°C (210°F)] and an SSI (12.5 minutes) of 5.5. The calculated $C_n$ value for this polymer is 10.4.

### EXAMPLE 6

The same procedure as Example 1 was followed except that the monomer mix was 30 parts cetyl-eicosyl methacrylate, 50 parts lauryl-myristyl methacrylate, 20 parts hydroxypropyl methacrylate and 0.85 parts dodecyl mercaptan. The final monomer conversion was 95.5% and the batch had a final polymer content of 45.7% after dilution with 100N oil, a viscosity of $5.13 \times 10^{-4} \ m^2 \ s^{-1}$ (513 centistokes) [at 98.9°C (210°F)] and an SSI (12.5 minutes) of 8.4. The calculated $C_n$ value for this polymer is 10.4.

### EXAMPLE 7

A monomer mix was prepared from 31.5 parts cetyl-eicosyl methacrylate (100% basis, 95% purity), 58 parts isodecyl methacrylate (100% basis, 98% purity), 10 parts methyl methacrylate and 10 parts hydroxypropyl methacrylate. The monomer mix, 21.9 parts 100N oil and 0.55 parts dodecyl mercaptan were then charged to a nitrogen flushed kettle fitted with a thermometer and Thermowatch to control temperature, a water-cooled reflux condenser with nitrogen outlet, a stirrer, a nitrogen inlet and an addition funnel. The contents of the kettle were heated to 110°C and held there; 30 minutes later the first of four delayed initiator shots, the first two consisting of 0.012 parts of 1,1-di(*t*-butylperoxy)-3,3,5-trimethylcyclohexane in 0.64 parts 100N oil, was added. Thirty minutes after the first delayed initiator shot the second initiator shot, identical to the first initiator shot, was added. Thirty minutes later, the third delayed initiator shot, 0.13 parts of 1,1-di(t-butylperoxy)-3,3,5-trimethylcyclohexane in 1.28 parts 100N oil, was added. Thirty minutes later, the fourth delayed initiator shot, identical to the third initiator shot, was added. The final monomer conversion was 96.1% and the batch had a final polymer content of 53.5% after dilution with 100N oil, a viscosity of $7.72 \times 10^{-4} \ m^2 \ s^{-1}$ (772 centistokes) [at 98.9°C (210°F)] and an SSI (12.5 minutes) of 12.7. The calculated $C_n$ value for this polymer is 8.7.

### EXAMPLE 8

Performance characteristics in the Sequence VE Test (engine cleanliness) of the ashless dispersant additives of the present invention are presented in Table 1. The sludge values listed in Table 1 are for the rocker arm cover sludge after 10 days (or 12 days, indicated by * in Table 1) intermediate inspection and for the average sludge after 12 days (CRC merit rating of 10.0 represents the cleanest engine). Each of the formulations, F through R, contained 0-6% of the ashless dispersant (45-50% active ingredient) being tested, 10.5% of a commercial DI package tailored for a dispersant viscosity index improver (available from Amoco Chemicals as Amoco PC-8004), 4.6% of a commercial non-dispersant viscosity index (VI) improver (Acryloid 702 poly(alkyl-methacrylate) type, available from Rohm and Haas Co.), with the remainder (79-84%) of the formulation being made up of a paraffinic base oil (Exxon 100N oil); in addition, all formulations contained 0.01% of an antifoam solution of DCF-200 silicone fluid, available from Dow Corning Corp. Formulation S used a DI package from Ethyl Corporation, modified Hitec 993 (reduced ashless dispersant), with the remainder of the formulation being as indicated for Formulations F-R above. Each of the formulations F through R contained a baseline amount of 2.0% ashless dispersant contributed by the DI package being used; formulation S contained 1.0% ashless dispersant from the DI package. The concentration of ashless dispersant being tested listed in Table 1 is in addition to that contributed by the DI package.

The ashless dispersant additives tested had the following compositions:

```
F:        poly(65 LMA/30 CEMA/5 HPMA)
G:        poly(9 MMA/53 IDMA)/29 CEMA/9 HPMA)
H,J,K:    poly(60 LMA/30 CEMA/10 HPMA)
L:        poly(50 LMA/30 CEMA/20 HPMA)
M,N:      poly(50 LMA/30 CEMA/20 HPMA)
S:        poly(65 LMA/15 CEMA/20 HPMA)
```

MA is methyl methacrylate and is isodecyl methacrylate. Formulation Q represents the use of a commercial nitrogen-containing ashless dispersant additive (Amoco 9250) and formulation R was a control sample with no ashless dispersant additive added; NA means not measured.

TABLE 1

| Sequence VE Test (Engine Cleanliness) | | | |
|---|---|---|---|
| | Ashless Dispersant | | |
| Formulation | % Active Ingredient | % HPMA in Additive | Sludge (Rocker Arm Cov/Aver) |
| R | 0 | --- | 3.9/NA |
| Q | 0.9 | 0% | 9.4/8.6 |
| Q | 0.9 | 0% | 9.3/7.8 |
| F | 0.9 | 5% | 7.5/NA |
| G | 0.9 | 9% | 4.9/4.3 |
| H | 0.9 | 10% | 9.0/7.9 |
| J | 1.8 | 10% | 9.4/6.5 |
| K | 2.7 | 10% | 9.4/9.1 |
| L | 0.9 | 20% | 9.6/8.7 |
| M | 1.35 | 20% | 9.3/8.8 |
| N | 1.8 | 20% | 9.4/9.2 |
| S | 2 | 20% | 8.3*/7.1 |
| S | 2.8 | 20% | 9.1*/8.4 |
| S | 4 | 20% | 9.3*/9.4 |

The above data show that as the HPMA level is increased in a formulation, either by increasing the HPMA level in the ashless dispersant additive itself or by increasing the amount of additive used, engine cleanliness is increasingly improved. An ashless dispersant additive containing methyl methacrylate (formulation G) does not perform as well as those without methyl methacrylate, which demonstrates the importance of balancing the average carbon content of the alkyl side chain of the polymer to achieve desired additive solubility properties. Ashless dispersant formulations (non-nitrogen-containing) of the present invention containing 10 to 20% HPMA provide overall engine cleanliness in a manner similar to that of the commercial nitrogen-containing ashless dispersant formulation, Q, but have the added advantage of being compatible with Viton fluoropolymer engine seal materials as well as having better low-temperature performance as shown in Example 10 (Formulation C). While formulation Q gives satisfactory engine cleanliness, it is incompatible with fluoropolymer seal materials as shown in Formulation B in Example 9.

## EXAMPLE 9

Compositions of the present invention were subjected to a compatibility test (Engine Seal Compatibility Test) for fluorohydrocarbon polymers, in particular, Viton fluoroelastomers, used in engine seals, gaskets, etc. The test is based on the immersion of seal or gasket materials in fluids containing candidate ashless dispersant additives and was conducted under conditions similar to those defined in the ISO-37-1977(E) procedure (developed by the technical committee of the International Organisation for Standardisation (IS0/TC45)) using a S3A dumb-bell shaped test specimen.

Evaluation was conducted as follows: in a beaker, three S3A dumb-bell shaped specimens made of Viton fluoroelastomer (AK6) were immersed in the test fluid such that 80 parts of test fluid were present per 1 part of test specimen (volume/volume). The test fluid (Exxon 150N oil) contained 4.5-6.7% (weight) of the ashless dispersant compositions (45-50% active ingredient) to be tested. The beaker was then covered with a watch glass and placed in a forced-air oven maintained at 149-151°C. The test specimens were subjected to the above conditions for 7 days, after which they were removed, allowed to cool and then rinsed lightly with hexane to remove residual test fluid. The test specimens were then air-dried and the tensile strength (tensile strength-at-break or TSB) and elongation characteristics (% elongation-at-break or %ELB) were determined using a stress-strain measurement procedure @ 14.6 cm (5.75 inches)/minute elongation rate. The change of elongation or tensile strength of Viton elastomer test specimens was then compared to the elongation and tensile strength data from untreated Viton elastomer samples and the result was expressed as a percentage:

$$\frac{[\%ELB_{treated} - \%ELB_{untreated}]}{[\%ELB_{untreated}]} \times 100 = \%ELB \text{ Change}$$

A similar expression is used to calculate the change in tensile strength at break (%TSB Change). The more negative the value for %ELB Change, the greater the aggressiveness of the test fluid towards the Viton fluoroelastomer specimen. Under the test conditions described, fluids resulting in a reduction of more than 45% of the original (untreated) %ELB value (expressed as %ELB Change = -45%) were considered to be very aggressive towards the sample tested and, therefore, incompatible with the Viton fluoroelastomer engine seal. Values of %ELB Change and %TSB Change of zero to -5% and zero to about -15%, respectively, were representative of neutral conditions and, therefore, compatible with the engine seals. Values of %ELB Change and %TSB Change of about -20% and -30%, respectively, i.e., more negative, indicated poor seal compatibility. The %ELB and TSB results are greatly affected by the manner in which the immersion test is conducted and the particular measurement equipment used and it is important to include comparative untreated sample results with each new set of immersion test samples.

Performance characteristics in the Engine Seal Compatibility Test of the ashless dispersants of the present invention and those representing commercial nitrogen-containing ashless dispersants are presented in Table 2. Samples of Viton fluoroelastomer were immersed in test fluids (Exxon 150N oil) containing the additives listed. %ELB Change and %TSB Change values are expressed as the average for three specimens tested in each fluid.

| | |
|---|---|
| A-Comparative | OLOA 1200 (nitrogen-containing, available from Chevron Chemicals) |
| B-Comparative | Amoco 9250 (nitrogen-containing, available from Amoco Chemicals) |
| C-Comparative | Hitec 646 (nitrogen-containing, available from Ethyl Corporation) |

The ashless dispersants listed above are all components of commercial detergent-inhibitor (DI) packages, typically provided in a mineral oil base stock.

Compositions D and E represent polymeric ashless dispersant additives (monomer type and content indicated) of the present invention (CEMA is cetyl-eicosyl methacrylate, LMA is lauryl-myristyl methacrylate, HPMA is hydroxypropyl methacrylate):

D　LMA/CEMA/HPMA (60/30/10)
E　　LMA/CEMA/HPMA (50/30/20)

TABLE 2

| Engine Seal Compatibility Test | | | |
|---|---|---|---|
| Ashless Dispersant | % Usage | %TSB Change | %ELB Change |
| A | 4.5 | -53 | -43 |
| A | 6.7 | -53 | -44 |
| B | 4.5 | -59 | -49 |
| B | 6.7 | -63 | -55 |

TABLE 2 (continued)

| Engine Seal Compatibility Test | | | |
|---|---|---|---|
| Ashless Dispersant | % Usage | %TSB Change | %ELB Change |
| C | 4.5 | -53 | -42 |
| C | 6.7 | -52 | -42 |
| D | 4.5 | -12 | +2 |
| D | 6.7 | -11 | -2 |
| E | 4.5 | -12 | +3 |
| E | 6.7 | -10 | +2 |

## EXAMPLE 10

Performance characteristics in the Cold-Cranking Simulator (CCS) test for the ashless dispersant additives of the present invention are presented in Table 3. Blends of the additives (commercial nitrogen-containing additives and those of the present invention (non-nitrogen-containing)) to be tested were prepared by mixing various amounts of the additive (50% active ingredient), approximately 5% of a non-dispersant VI improver (Acryloid 702) and the recommended use level of selected commercial DI package indicated below (to satisfy minimum dispersancy requirements (Sequence VE test), see Example 8) with a calculated amount of Exxon 100N and 150N oil to satisfy overall viscosity requirements of an SAE 5W-30 oil blend (according to SAE J300 Engine Oil Viscosity Classification (January 1991)). Three formulations were prepared according to the latter description, each differing in the commercial DI package used:

| Formulation A | 6.3% modified Hitec 993 (reduced ashless dispersant) DI package from Ethyl Corporation |
|---|---|
| Formulation B | 10.6% OLOA 8380A DI package from Chevron Chemical |
| Formulation C | 10.5% Amoco PC-8004 DI package from Amoco Chemical |

To each of the above formulations were added various amounts of additional ashless dispersant additive to improve the dispersancy of the formulation and to determine the effect on CCS viscosity. In all cases where the ashless dispersant of the present invention was used it was a poly(50-60 LMA/30 CEMA/10-20 HPMA) composition and designated as Invention in Table 3; the 10% HPMA composition was used for Formulation A and the 20% HPMA for Formulations B and C.

TABLE 3

| Cold-Cranking Simulator (CCS) Test | | | |
|---|---|---|---|
| Formulation | Ashless Dispersant | | CCS Viscosity Pa s (Poise) @ -25°C |
| | Type | % | |
| A | - | ---- | 2.38(23.8) |
| A | Hitec 646 | 0.9 | 3.06(30.6) |
| A | Hitec 646 | 1.8 | 3.64(36.4)* |
| A | Hitec 646 | 2.7 | 4.40(44.0)* |
| A | Invention | 0.9 | 2.53(25.3) |
| A | Invention | 1.8 | 2.58(25.8) |
| A | Invention | 2.7 | 2.63(26.3) |
| B | ---- | ---- | 3.07(30.7) |
| B | OLOA 1200 | 0.9 | 3.45(34.5) |
| B | Invention | 0.9 | 3.24(32.4) |
| C | ----- | ---- | 2.94(29.4) |
| C | Amoco9250 | 0.9 | 3.32(33.2) |
| C | Invention | 0.9 | 3.08(30.8) |

* viscosity exceeds specification of less than 3.5 Pa s (35 poise)

In each grouping of formulations, use of the ashless dispersant of the invention results in lower CCS viscosities when used at a level comparable to the commercial nitrogen-containing ashless dispersant.

## EXAMPLE 11

Pour points are based on a procedure defined in ASTM D-97-66, where a specified amount of the pour point depressant (PPD) additive is added to a base oil and the resultant treated oil is then subjected to temperature cycling in a low-temperature bath for determination of the "pour point" in °C. Table 4 contains pour point data (°C) for various poly(50-60 LMA/30 CEMA/10-20 HPMA) compositions (45-50% active ingredient) of the present invention.

TABLE 4

| Pour Point Depressancy (°C) | | | | |
| --- | --- | --- | --- | --- |
| % HPMA | % PPD in Exxon 100N Oil | | % PPD in Exxon 600N Oil | |
| in PPD | 0.15 | 0.30 | 0.15 | 0.30 |
| 0* | -21* | -21* | -12* | -12* |
| 10 | -33 | -36 | -24 | -27 |
| 20 | -33 | -36 | -18 | -21 |
| 20 | -33 | -33 | -21 | -24 |

* base oil alone (without PPD)

The above data indicate that the ashless dispersant additives of the present invention possess pour point depressant properties (12-15°C depression of the pour point) comparable to the use of a commercial non-hydroxyalkyl methacrylate-containing pour point depressant, such as Acryloid 156 (available from Rohm and Haas Co.) at 0.1 to 0.2% (50% active ingredient) in the same base oil stocks.

"Viton", "Thermowatch", "Hitec", "Amoco", "OLOA", and "Acryloid" are trademarks which may be registered in one or more of the designated countries.

## Claims

1. A polymer obtainable by polymerising monomers comprising:

   (a) from 70 to 90 weight percent of one or more first monomer selected from $(C_1-C_{24})$alkyl methacrylates and $(C_1-C_{24})$alkyl acrylates, wherein the first monomer(s) contains less than 10 weight percent $(C_1-C_3)$alkyl methacrylate or $(C_1-C_3)$alkyl acrylate, and
   (b) from 10 to 30 weight percent of one or more second monomer selected from hydroxy$(C_2-C_6)$alkyl methacrylates and hydroxy$(C_2-C_6)$alkyl acrylates,

   wherein the number of carbon atoms in the alkyl groups averages from 8 to 14, and the polymer has a weight-average molecular weight from 20,000 to 200,000 and which comprises, based on the total weight of monomers (a) and (b), up to 30 weight percent of $(C_{16}-C_{24})$alkyl methacrylates, $(C_{16}-C_{24})$alkyl acrylates, or a mixture thereof

2. A polymer as claimed in claim 1, wherein monomer (a) comprises:

   (i) from 0 to 5% by weight of an alkyl methacrylate or alkyl acrylate in which the alkyl group contains from 1 to 6 carbon atoms, or mixture thereof;
   (ii) from 35 to 70% by weight of an alkyl methacrylate or alkyl acrylate in which the alkyl group contains from 7 to 15 carbon atoms, or mixture thereof;
   (iii) from 20 to 30% by weight of an alkyl methacrylate or alkyl acrylate in which the alkyl group contains from 16 to 24 carbon atoms, or mixture thereof;

   and monomer (b) comprises from 10 to 20% by weight of a hydroxyalkyl methacrylate or acrylate in which the alkyl group contains from 2 to 6 carbon atoms and is substituted with one or more hydroxyl groups, or mixture thereof, and the total of (i), (ii), (iii) and (b) equals 100% by weight of the polymer.

3. A polymer as claimed in claim 2, wherein the (a) monomers are selected from one or more of methyl methacrylate, butyl methacrylate, isobutyl methacrylate, 2-ethylhexyl methacrylate, isodecyl methacrylate,dodecyl-pentadecyl methacrylate, lauryl-myristyl methacrylate, cetyl-stearyl methacrylate, cetyl-eicosyl methacrylate, and the (b) monomers are one or more of 2-hydroxyethyl methacrylate, 2-hydroxyethyl acrylate, 2-hydroxypropyl methacrylate, 1-methyl-2-hydroxyethyl methacrylate, 2-hydroxypropyl acrylate, 1-methyl-2-hydroxyethyl acrylate, 2-hydroxybutyl methacrylate, and 2-hydroxybutyl acrylate.

4. A polymer as daimed in claim 1, wherein monomer (a) comprises from 80 to 90% by weight of an alkyl methacrylate or alkyl acrylate in which the alkyl group contains from 10 to 14 carbon atoms, or mixture thereof, and monomer (b) comprises from 10 to 20% by weight of a hydroxy($C_2$-$C_3$)alkyl methacrylate or acrylate, or mixture thereof.

5. A polymer as claimed in claim 4, wherein monomer (a) is lauryl-myristyl methacrylate, and monomer (b) is hydroxypropyl methacrylate.

6. A polymer as claimed in claim 1, which comprises, based on the total weight of monomers (a) and (b), from 10 to 30 weight percent of ($C_{16}$-$C_{20}$)alkyl methacrylates, ($C_{16}$-$C_{20}$)alkyl acrylates, or mixture thereof.

7. A polymer as claimed in claim 6, wherein monomer (b) is selected from

   2-hydroxyethyl methacrylate, 2-hydroxyethyl acrylate, 2-hydroxypropyl methacrylate, 1-methyl-2-hydroxyethyl methacrylate, 2-hydroxypropyl acrylate,
   1-methyl-2-hydroxyethyl acrylate, 2-hydroxybutyl methacrylate, and
   2-hydroxybutyl acrylate.

8. A polymer as claimed in any preceding claim, wherein the polymer has a weight average molecular weight of from greater than 20,000 and up to 200,000.

9. A polymer as claimed in claim 8, wherein the polymer has a weight average molecular weight of from greater than 20,000 and up to 100,000.

10. A polymer as claimed in any of claims 1 to 7, wherein the polymer has a weight-average molecular weight from 20,000 to 100,000.

11. A polymer as claimed in any of claims 1 to 8, wherein the polymer has a weight-average molecular weight from greater than 100,000 and up to 200,000.

12. A polymer as claimed in claim 2, wherein monomer (b) is selected from hydroxy-($C_2$-$C_6$)alkyl methacrylates.

13. A polymer as claimed in claim 12, wherein the polymer comprises 0% (i), 50 to 60% (ii), 20 to 30% (iii) and 15 to 20% (b).

14. A polymer as claimed in claim 13, wherein monomer (b) is selected from

   2-hydroxyethyl methacrylate, 2-hydroxyethyl acrylate, 2-hydroxypropyl methacrylate, 1-methyl-2-hydroxyethyl methacrylate, 2-hydroxypropyl acrylate,
   1-methyl-2-hydroxyethyl acrylate, 2-hydroxybutyl methacrylate, and 2-hydroxybutyl acrylate.

15. A polymer as daimed in daim 13, wherein monomer (b) is a mixture of 2-hydroxy-propyl methacrylate and 1-methyl-2-hydroxyethyl methacrylate.

16. A polymer as claimed in daim 15, wherein (ii) is lauryl-myristyl methacrylate and (iii) is cetyl-eicosyl methacrylate.

17. A polymer as daimed in any of claims 12 to 16, wherein the polymer has a weight average molecular weight of from greater than 20,000 and up to 200,000.

18. A polymer as claimed in daim 17, wherein the polymer has a weight average molecular weight of from greater than 20,000 and up to 100,000.

19. A polymer as claimed in any of claims 12 to 16, wherein the polymer has a weight-average molecular weight from 20,000 to 100,000.

20. A polymer as claimed in any of claims 12 to 17, wherein the polymer has a weight-average molecular weight from greater than 100,000 and up to 200,000.

21. A polymer as claimed in any preceding claim, wherein the number of carbon atoms in the alkyl groups averages from 9 to 12.

22. A process for preparing a polymer as claimed in any of claims 1 to 21, which comprises polymerising monomers comprising

    (a) from 70 to 90 weight percent of one or more first monomer selected from $(C_1\text{-}C_{24})$alkyl methacrylates and $(C_1\text{-}C_{24})$alkyl acrylates, wherein the first monomer(s) contains less than 10 weight percent $(C_1\text{-}C_3)$alkyl methacrylate or $(C_1\text{-}C_3)$alkyl acrylate, and

    (b) from 10 to 30 weight percent of one or more second monomer selected from hydroxy$(C_2\text{-}C_6)$alkyl methacrylates and hydroxy$(C_2\text{-}C_6)$alkyl acrylates,

wherein the number of carbon atoms in the alkyl groups averages from 8 to 14, and the polymer has a weight-average molecular weight from 20,000 to 200,000 and comprises, based on the total weight of monomers (a) and (b), up to 30 weight percent of $(C_{16}\text{-}C_{24})$alkyl methacrylates, $(C_{16}\text{-}C_{24})$alkyl acrylates, or a mixture thereof.

23. A lubricating oil composition comprising a lubricating oil and from 0.5 to 15% by weight of a polymer as daimed in any of claims 1 to 21, or as prepared by a process as claimed in claim 22.

24. A lubricating oil composition as claimed in claim 23, wherein the polymers are used as ashless dispersants at concentrations where sufficient dispersancy to the lubricating oil composition is provided and the polymers contribute less than 50% of the overall viscosity of the lubricating oil composition.

25. A lubricating oil composition as claimed in daim 24, wherein the shear stability of the polymers used is represented by shear stability index values of less than 25%.

26. A lubricating oil composition as claimed in claim 23, wherein the polymer comprises 50 to 60% lauryl-myristyl methacrylate, 20 to 30% cetyl-eicosyl methacrylate, and 10 to 20% of a mixture of 2-hydroxypropyl methacrylate and 1-methyl-2-hydroxyethyl methacrylate.

27. A concentrate for use in lubricating oils comprising (i) diluent, and (ii) from 30 to 70% by weight of a polymer as claimed in any of claims l to 21, or as prepared by a process as claimed in daim 22.

28. A concentrate as claimed in claim 27, wherein the polymer comprises about 50 to about 60% lauryl-myristyl methacrylate, 20 to 30% cetyl-eicosyl methacrylate, and 10 to 20% of a mixture of 2-hydroxypropyl methacrylate and 1-methyl-2-hydroxyethyl methacrylate.

29. Use, as an ashless dispersant in a lubricating oil composition, of a polymer as claimed in any of claims 1 to 21, or as prepared by a process as claimed in claim 22.

**Revendications**

1. Polymère que l'on peut obtenir en polymérisant des monomères comprenant :

    a) de 70 à 90 % en poids d'un ou plusieurs premiers monomères choisis parmi les méthacrylates d'alkyle en $C_1$ à $C_{24}$ et les acrylates d'alkyle en $C_1$ à $C_{24}$, où le ou les premiers monomères contenant moins de 10 % en poids de méthacrylate d'alkyle en $C_1$ à $C_3$ ou d'acrylate d'alkyle en $C_1$ à $C_3$ ; et
    b) de 10 à 30 % en poids d'un ou plusieurs seconds monomères choisis parmi les méthacrylates d'hydroxyalk-

yle en $C_2$ à $C_6$ et les acrylates d'hydroxyalkyle en $C_2$ à $C_6$,

c) où le nombre d'atomes de carbone dans les groupes alkyles étant en moyenne de 8 à 14, et le polymère ayant un poids moléculaire moyen en poids de 20 000 à 200 000 et qui comprend, sur la base du poids total des monomères (a) et (b), jusqu'à 30 % en poids de méthacrylates d'alkyle en $C_{16}$ à $C_{24}$, d'acrylates d'alkyle en $C_{16}$ à $C_{24}$, ou d'un de leurs mélanges.

2. Polymère selon la revendication 1,
dans lequel,
le monomère (a) comprend

(i) de 0 à 5 % en poids d'un méthacrylate d'alkyle ou d'un acrylate d'alkyle, où le groupe alkyle contient de 1 à 6 atomes de carbone, ou de leurs mélanges ;
(ii) de 35 à 70 % en poids d'un méthacrylate d'alkyle ou d'un acrylate d'alkyle dans lequel le groupe alkyle contient de 7 à 15 atomes de carbone, ou de leurs mélanges ;
(iii) de 20 à 30 % en poids d'un méthacrylate d'alkyle ou d'un acrylate d'alkyle dans lequel le groupe alkyle contient de 16 à 24 atomes de carbone, ou de leurs mélanges ;

et le monomère (b) comprend 10 à 20 % en poids d'un méthacrylate ou acrylate d'hydroxyalkyle dans lequel le groupe alkyle contient de 2 à 6 atomes de carbone, et est substitué par un ou plusieurs groupes hydroxyle, ou de leurs mélanges, et le total de (i), (ii), (iii) et (b) est égal à 100 % en poids du polymère.

3. Polymère selon la revendication 2,
dans lequel,
les monomères (a) sont choisis parmi un ou plusieurs des corps suivants : méthacrylate de méthyle, méthacrylate de butyle, méthacrylate d'isobutyle, méthacrylate de 2-éthylhexyle, méthacrylate d'isodécyle, méthacrylate de dodécyl-pentadécyle, méthacrylate de lauryl-myristyle, méthacrylate de cétyl-stéaryle, méthacrylate de cétyl-éicosyle, et les monomères (b) sont l'un ou plusieurs des corps suivants : méthacrylate de 2-hydroxyéthyle, acrylate de 2-hydroxyéthyle, méthacrylate de 2-hydroxypropyle, méthacrylate de l-méthyl-2-hydroxyéthyle, acrylate de 2-hydroxypropyle, acrylate de 1-méthyl-2-hydroxyéthyle, méthacrylate de 2-hydroxybutyle, et acrylate de 2-hydroxybutyle.

4. Polymère selon la revendication 1
dans lequel,
le monomère (a) comprend de 80 à 90 % en poids d'un méthacrylate d'alkyle ou acrylate d'alkyle dans lequel le groupe alkyle contient de 10 à 14 atomes de carbone, ou de leurs mélanges, et le monomère (b) comprend de 10 à 20 % en poids d'un méthacrylate ou acrylate d'hydroxyalkyle en $C_2$ à $C_3$ ou de leurs mélanges.

5. Polymère selon la revendication 4,
dans lequel,
le monomère (a) est le méthacrylate de lauryl-myristyle, et le monomère (b) est le méthacrylate d'hydroxypropyle.

6. Polymère selon la revendication 1,
qui comprend, sur la base du poids total des monomères (a) et (b), de 10 à 30 % en poids de méthacrylates d'alkyle en $C_{16}$ à $C_{20}$, d'acrylates d'alkyle en $C_{16}$ à $C_{20}$ ou de leurs mélanges.

7. Polymère selon la revendication 6,
dans lequel,
le monomère (b) est choisi parmi le méthacrylate de 2-hydroxyéthyle, l'acrylate de 2-hydroxyéthyle, le méthacrylate de 2-hydroxypropyle, le méthacrylate de 1-méthyl-2-hydroxyéthyle, l'acrylate de 2-hydroxypropyle, l'acrylate de 1-méthyl-2-hydroxyéthyle, le méthacrylate de 2-hydroxybutyle, et l'acrylate de 2-hydroxybutyle.

8. Polymère selon l'une quelconque des revendications précédentes,
où le polymère a une poids moléculaire moyen en poids allant de plus de 20 000 à 200 000.

9. Polymère selon la revendication 8,
le polymère ayant un poids moléculaire moyen en poids allant de plus de 20 000 à 100 000.

10. Polymère selon l'une quelconque des revendications 1 à 7,

le polymère ayant un poids moléculaire moyen en poids de 20 000 à 100 000.

11. Polymère selon l'une quelconque des revendications 1 à 8,
le polymère ayant un poids moléculaire moyen en poids de plus de 100 000 à 200 000.

12. Polymère selon la revendication 2,
dans lequel,
le monomère (b) est choisi parmi le méthacrylate d'hydroxyalkyle en $C_2$ à $C_6$.

13. Polymère selon la revendication 12,
le polymère comprenant une quantité de 0 % (i), 50 à 60 % (ii), 20 à 30 % (iii) et 15 à 20 % (b).

14. Polymère selon la revendication 13,
dans lequel,
le monomère (b) est choisi parmi le méthacrylate de 2-hydroxyéthyle, l'acrylate de 2-hydroxyéthyle, le méthacrylate de 2-hydroxypropyle, le méthacrylate de 1-méthyl-2-hydroxyéthyle, l'acrylate de 2-hydroxypropyle, l'acrylate de 1-méthyl-2-hydroxyéthyle, le méthacrylate de 2-hydroxybutyle, et l'acrylate de 2-hydroxybutyle.

15. Polymère selon la revendication 13,
dans lequel,
le monomère (b) est un mélange d'acrylate de 2-hydroxypropyle et de méthacrylate de 1-méthyl-2-hydroxyéthyle.

16. Polymère selon la revendication 15,
dans lequel,
(ii) est le méthacrylate de lauryl-myristyle et (iii) est le méthacrylate de cétyl-éicosyle.

17. Polymère selon l'une quelconque des revendications 12 à 16,
le polymère ayant un poids moléculaire moyen en poids allant de plus de 20 000 à 200 000.

18. Polymère selon la revendication 17,
le polymère ayant un poids moléculaire moyen en poids allant de plus de 20 000 à 100 000.

19. Polymère selon l'une quelconque des revendications 12 à 16,
le polymère ayant un poids moléculaire moyen en poids de 20 000 à 100 000.

20. Polymère selon l'une quelconque des revendications 12 à 16,
le polymère ayant un poids moléculaire moyen en poids de plus de 100 000 à 200 000.

21. Polymère selon l'une quelconque des revendications précédentes,
dans lequel,
le nombre d'atomes de carbone dans les groupes alkyle est en moyenne de 9 à 12.

22. Procédé de préparation d'un polymère selon l'une quelconque des revendications 1 à 21,
dans lequel,
on polymérise des monomères comprenant

a) de 70 à 90 % en poids d'un ou plusieurs premiers monomères choisis parmi les méthacrylates d'alkyle en $C_1$ à $C_{24}$ et les acrylates d'alkyle en $C_1$ à $C_{24}$, où le ou les premiers monomères contenant moins de 10 % en poids de méthacrylate d'alkyle en $C_1$ à $C_3$ ou d'acrylate d'alkyle en $C_1$ à $C_3$ ; et
b) de 10 à 30 % en poids d'un ou plusieurs seconds monomères choisis parmi les méthacrylates d'hydroxyalkyle en $C_2$ à $C_6$ et les acrylates d'hydroxyalkyle en $C_2$ à $C_6$,

où le nombre d'atomes de carbone dans les groupes alkyles est en moyenne de 8 à 14, et le polymère ayant un poids moléculaire moyen en poids de 20 000 à 200 000 et qui comprend, sur la base du poids total des monomères (a) et (b), jusqu'à 30 % en poids de méthacrylates d'alkyle en $C_{16}$ à $C_{24}$, d'acrylates d'alkyle en $C_{16}$ à $C_{24}$, ou d'un de leurs mélanges.

23. Composition d'huile lubrifiante comprenant une huile lubrifiante et de 0,5 à 15 % en poids d'un polymère selon l'une quelconque des revendications 1 à 21, ou préparée par un procédé tel que revendiqué dans la revendication 22.

**24.** Composition d'huile lubrifiante selon la revendication 23,
dans laquelle,
les polymères sont utilisés sous forme de dispersants sans cendres à des concentrations auxquelles une dispersion suffisante est fournie à la composition d'huile lubrifiante et les polymères contribuent pour moins de 50 % à la viscosité globale de la composition d'huile lubrifiante.

**25.** Composition d'huile lubrifiante selon la revendication 24,
dans laquelle,
la stabilité au cisaillement des polymères utilisés est représentée par des valeurs d'indice de stabilité au cisaillement inférieures à 25 %.

**26.** Composition d'huile lubrifiante selon la revendication 23,
dans laquelle,
le polymère comprend de 50 à 60 % de méthacrylate de lauryl-myrisyle, de 20 à 30 % de méthacrylate de cétyl-éicosyle, et de 10 à 20 % d'un mélange de méthacrylate de 2-hydroxypropyle et de méthacrylate de 1-méthyl-2-hydroxyéthyle.

**27.** Concentré pour utilisation dans des huiles lubrifiantes comprenant (i) un diluant et (ii) de 30 à 70 % en poids d'un polymère tel que revendiqué dans l'une quelconque des revendications 1 à 21, ou tel que préparé par un procédé selon la revendication 22.

**28.** Concentré selon la revendication 27,
dans lequel
le polymère comprend environ 50 à environ 60 % de méthacrylate de lauryl-myrisyle, de 20 à 30 % de méthacrylate de cétyl-éicosyle, et de 10 à 20 % d'un mélange de méthacrylate de 2-hydroxypropyle et de méthacrylate de 1-méthyl-2-hydroxyéthyle.

**29.** Utilisation, comme dispersant sans cendres dans une composition d'huile lubrifiante, d'un polymère selon l'une quelconque des revendications 1 à 21, ou tel que préparé par un procédé tel que revendiqué dans la revendication 22.

**Patentansprüche**

**1.** Polymer, erhältlich dadurch, daß man als Monomere:

(a) 70 bis 90 Gewichtsprozent eines oder mehrerer erster Monomere aus der Gruppe der $C_1$-$C_{24}$-Alkylmethacrylate und $C_1$-$C_{24}$-Alkylacrylate, wobei das bzw. die ersten Monomere weniger als 10 Gewichtsprozent $C_1$-$C_3$-Alkylmethacrylat oder $C_1$-$C_3$-Alkylacrylat enthält bzw. enthalten, und
(b) 10 bis 30 Gewichtsprozent eines oder mehrerer zweiter Monomere aus der Gruppe der Hydroxy-$C_2$-$C_6$-alkylmethacrylate und Hydroxy-$C_2$-$C_6$-alkylacrylate polymerisiert,

wobei die Zahl der Kohlenstoffatome in den Alkylgruppen im Durchschnitt 8 bis 14 beträgt und das Polymer ein gewichtsmittleres Molekulargewicht von 20.000 bis 200.000 aufweist und, bezogen auf das Gesamtgewicht der Monomere (a) und (b), bis zu 30 Gewichtsprozent $C_{16}$-$C_{24}$-Alkylmethacrylate, $C_{16}$-$C_{24}$-Alkylacrylate oder einer Mischung davon enthält.

**2.** Polymer nach Anspruch 1, bei dem als Monomer (a):

(i) 0 bis 5 Gew.-% eines Alkylmethacrylats oder Alkylacrylats mit 1 bis 6 Kohlenstoffatomen in der Alkylgruppe oder einer Mischung davon;
(ii) 35 bis 70 Gew.-% eines Alkylmethacrylats oder Alkylacrylats mit 7 bis 15 Kohlenstoffatomen in der Alkylgruppe oder einer Mischung davon;
(iii) 20 bis 30 Gew.-% eines Alkylmethacrylats oder Alkylacrylats mit 16 bis 24 Kohlenstoffatomen in der Alkylgruppe oder einer Mischung davon

und als Monomer (b) 10 bis 20 Gew.-% eines Hydroxyalkylmethacrylats oder Hydroxyalkylacrylats, in dem die Alkylgruppe 2 bis 6 Kohlenstoffatome aufweist und das mit einer oder mehreren Hydroxylgruppen substituiert ist, oder einer Mischung davon eingesetzt wird und die Gesamtmenge von (i), (ii), (iii) und (b) 100 Gew.-% des Polymers entspricht.

3. Polymer nach Anspruch 2, bei dem die Monomere (a) aus einer oder mehreren Verbindungen der Gruppe Methylmethacrylat, Butylmethacrylat, Isobutylmethacrylat, 2-Ethylhexylmethacrylat, Isodecylmethacrylat, Dodecyl-/Pentadecylmethacrylat, Lauryl-/Myristylmethacrylat, Cetyl-/Stearylmethacrylat, Cetyl-/Eicosylmethacrylat und die Monomere (b) aus einer oder mehreren Verbindungen der Gruppe 2-Hydroxyethylmethacrylat, 2-Hydroxyethylacrylat, 2-Hydroxypropylmethacrylat, 1-Methyl-2-hydroxyethylmethacrylat, 2-Hydroxypropylacrylat, I-Methyl-2-hydroxyethylacrylat, 2-Hydroxybutylmethacrylat und 2-Hydroxybutylacrylat ausgewählt sind.

4. Polymer nach Anspruch 1, bei dem als Monomer (a) 80 bis 90 Gew.-% eines Alkylmethacrylats oder Alkylacrylats mit 10 bis 14 Kohlenstoffatomen in der Alkylgruppe oder einer Mischung davon und als Monomer (b) 10 bis 20 Gew.-% eines Hydroxy-$C_2$-$C_3$-alkylmethacrylats oder -acrylats oder einer Mischung davon eingesetzt werden.

5. Polymer nach Anspruch 4, bei dem es sich bei dem Monomer (a) um Lauryl-/Myristylmethacrylat und bei dem Monomer (b) um Hydroxypropylmethacrylat handelt.

6. Polymer nach Anspruch 1, das, bezogen auf das Gesamtgewicht der Monomeren (a) und (b), 10 bis 30 Gewichtsprozent $C_{16}$-$C_{20}$-Alkylmethacrylate, $C_{16}$-$C_{20}$-Alkylacrylate oder einer Mischung davon enthält.

7. Polymer nach Anspruch 6, bei dem das Monomer (b) aus der Gruppe 2-Hydroxyethylmethacrylat, 2-Hydroxyethylacrylat, 2-Hydroxypropylmethacrylat, 1-Methyl-2-hydroxyethylmethacrylat, 2-Hydroxypropylacrylat, I-Methyl-2-hydroxyethylacrylat, 2-Hydroxybutylmethacrylat und 2-Hydroxybutylacrylat ausgewählt ist.

8. Polymer nach einem der vorhergehenden Ansprüche mit einem gewichtsmittleren Molekulargewicht von mehr als 20.000 und bis zu 200.000.

9. Polymer nach Anspruch 8 mit einem gewichtsmittleren Molekulargewicht von mehr als 20.000 und bis zu 100.000.

10. Polymer nach einem der Ansprüche 1 bis 7 mit einem gewichtsmittleren Molekulargewicht von 20.000 bis 100.000.

11. Polymer nach einem der Ansprüche 1 bis 8 mit einem gewichtsmittleren Molekulargewicht von mehr als 100.000 und bis zu 200.000.

12. Polymer nach Anspruch 2, bei dem das Monomer (b) aus der Gruppe der Hydroxy-$C_2$-$C_6$-alkylmethacrylate ausgewählt ist.

13. Polymer nach Anspruch 12, enthaltend 0% (i), 50 bis 60% (ii), 20 bis 30% (iii) und 15 bis 20% (b).

14. Polymer nach Anspruch 13, bei dem das Monomer (b) aus der Gruppe 2-Hydroxyethylmethacrylat, 2-Hydroxyethylacrylat, 2-Hydroxypropylmethacrylat, 1-Methyl-2-hydroxyethylmethacrylat, 2-Hydroxypropylacrylat, 1-Methyl-2-hydroxyethylacrylat, 2-Hydroxybutylmethacrylat und 2-Hydroxybutylacrylat ausgewählt ist.

15. Polymer nach Anspruch 13, bei dem es sich bei dem Monomer (b) um eine Mischung aus 2-Hydroxypropylmethacrylat und I-Methyl-2-hydroxyethylmethacrylat handelt.

16. Polymer nach Anspruch 15, bei dem es sich bei (ii) um Lauryl-/Myristylmethacrylat und bei (iii) um Cetyl-/Eicosylmethacrylat handelt.

17. Polymer nach einem der Ansprüche 12 bis 16 mit einem gewichtsmittleren Molekulargewicht von mehr als 20.000 und bis zu 200.000.

18. Polymer nach Anspruch 17 mit einem gewichtsmittleren Molekulargewicht von mehr als 20.000 und bis zu 100.000.

19. Polymer nach einem der Ansprüche 12 bis 16 mit einem gewichtsmittleren Molekulargewicht von 20.000 bis 100.000.

20. Polymer nach einem der Ansprüche 12 bis 17 mit einem gewichtsmittleren Molekulargewicht von mehr als 100.000 und bis zu 200.000.

21. Polymer nach einem der vorhergehenden Ansprüche, bei dem die Zahl der Kohlenstoffatome in den Alkylgruppen im Durchschnitt 9 bis 12 beträgt.

22. Verfahren zur Herstellung eines Polymers nach einem der Ansprüche 1 bis 21, bei dem man als Monomere:

   (a) 70 bis 90 Gewichtsprozent eines oder mehrerer erster Monomere aus der Gruppe der $C_1$-$C_{24}$-Alkylmethacrylate und $C_1$-$C_{24}$-Alkylacrylate, wobei das bzw. die ersten Monomere weniger als 10 Gewichtsprozent $C_1$-$C_3$-Alkylmethacrylat oder $C_1$-$C_3$-Alkylacrylat enthält bzw. enthalten, und
   (b) 10 bis 30 Gewichtsprozent eines oder mehrerer zweiter Monomere aus der Gruppe der Hydroxy-$C_2$-$C_6$-alkylmethacrylate und Hydroxy-$C_2$-$C_6$-alkylacrylate polymerisiert,

   wobei die Zahl der Kohlenstoffatome in den Alkylgruppen im Durchschnitt 8 bis 14 beträgt und das Polymer ein gewichtsmittleres Molekulargewicht von 20.000 bis 200.000 aufweist und, bezogen auf das Gesamtgewicht der Monomere (a) und (b), bis zu 30 Gewichtsprozent $C_{16}$-$C_{24}$-Alkylmethacrylate, $C_{16}$-$C_{24}$-Alkylacrylate oder einer Mischung davon enthält.

23. Schmierölzusammensetzung, enthaltend ein Schmieröl und 0,5 bis 15 Gew.-% eines Polymers nach einem der Ansprüche 1 bis 21 bzw. eines nach Anspruch 22 hergestellten Polymers.

24. Schmierölzusammensetzung nach Anspruch 23, bei der die Polymere als aschefreie Dispergiermittel in Konzentrationen, die der Schmierölzusammensetzung ein ausreichendes Dispersionsvermögen verleihen, eingesetzt werden und zu weniger als 50% zur Gesamtviskosität der Schmierölzusammensetzung beitragen.

25. Schmierölzusammensetzung nach Anspruch 24, bei der die Scherstabilität der verwendeten Polymere durch Scherstabilitätsindex-Werte von weniger als 25% wiedergegeben wird.

26. Schmierölzusammensetzung nach Anspruch 23, bei der das Polymer 50 bis 60% Lauryl-/Myristylmethacrylat, 20 bis 30% Cetyl-/Eicosylmethacrylat und 10 bis 20% einer Mischung aus 2-Hydroxypropylmethacrylat und 1-Methyl-2-hydroxyethylmethacrylat enthält.

27. Konzentrat zur Verwendung in Schmierölen, enthaltend (i) Verdünnungsmittel und (ii) 30 bis 70 Gew.-% eines Polymers nach einem der Ansprüche 1 bis 21 bzw. eines nach Anspruch 22 hergestellten Polymers.

28. Konzentrat nach Anspruch 27, bei dem das Polymer etwa 50 bis etwa 60% Lauryl-/Myristylmethacrylat, 20 bis 30% Cetyl-/Eicosylmethacrylat und 10 bis 20% einer Mischung aus 2-Hydroxypropylmethacrylat und 1-Methyl-2-hydroxyethylmethacrylat enthält.

29. Verwendung eines Polymers nach einem der Ansprüche 1 bis 21 bzw. eines nach Anspruch 22 hergestellten Polymers als aschefreies Dispergiermittel in einer Schmierölzusammensetzung.